# EUROPEAN PATENT SPECIFICATION

(11) **EP 0 580 132 B1**
(45) Date of publication and mention of the grant of the patent: **19.03.1997**
(21) Application number: 93111620.6
(22) Date of filing: 21.07.1993
(51) Int. Cl.: G02F 1/1339

(54) **Gap controlling method for liquid crystal cells**
Verfahren zur Abstandseinstellung für Flüssigkristallzellen
Méthode pour contrôler l'écartement des cellules à cristal liquide

(30) Priority: 22.07.1992 JP 215720/92
(43) Date of publication of application: 26.01.1994
(73) Proprietor: Stanley Electric Co., Ltd., Meguro-ku Tokyo (JP)
(72) Inventor: Yamauchi,Shigekazu, Sagamihara-shi, Kanagawa-ken (JP); Ishikawa,Seiichi, Hiratsuka-shi, Kanagawa-ken (JP); Watanabe,Hideyuki, Hadano-shi, Kanagawa-ken (JP)
(74) Representative: Twelmeier, Ulrich, Dipl.Phys.

(56) References cited:
- PATENT ABSTRACTS OF JAPAN vol. 15, no. 95 (P-1176)7 March 1991 & JP-A-02 308 223 (SEIKO EPSON) 21 December 1990
- PATENT ABSTRACTS OF JAPAN vol. 14, no. 484 (P-1120)22 October 1990 & JP-A-02 196 284 (SEIKO INSTRUMENTS) 2 August 1990
- PATENT ABSTRACTS OF JAPAN vol. 15, no. 278 (P-1227)15 July 1991 & JP-A-03 094 218 (SHARP) 19 April 1991

## Description

### BACKGROUND OF THE INVENTION

### 1. Field of the Invention

The present invention relates to a gap controlling method for liquid crystal cells applicable to those in general.

### 2. Background Art

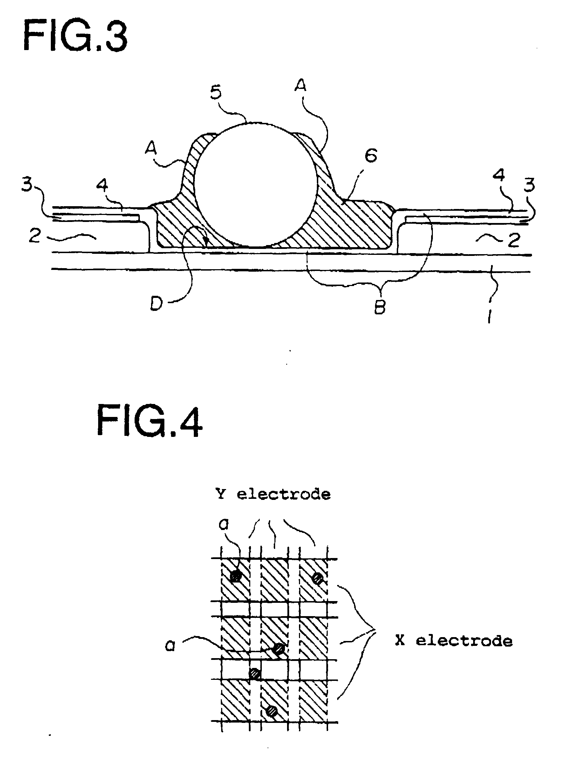

A conventional gap controlling method for liquid crystal cells comprises, as illustrated in Fig. 4, scattering a spacer material a over the entire glass substrate surfaces defined by the space between the two glass substrates facing each other so as to thereby control the desired distance between glass substrates uniformly to a certain value.

However, the above-mentioned conventional method is attended by the following problems. (A) Because of scattering a spacer material over the entire surface of glass substrate, in Fig. 4 in the effective display areas of X electrode and Y electrode as shown in hatching there is present the spacer material which influences the orientation of molecules of the liquid crystal such that generally the contrast ratio decreases as a result of light escape because of the spacer material. Especially, in the case of a vertically oriented type cell, contrast decreases because of abnormal behavior in the orientation of the liquid crystal in the neighborhood of the spacer material accompanied by micro-anomaly in the properties. (B) In the case of wet-scattering, dirts contained in solvents can enter a liquid crystal cell. Also, the ionic ingredients, etc. in solvents can contaminate the surface of the substrate. (C) In the case of wet-scattering, on the substrate there is a tendency of insufficient dispersion which widens the region of abnormal orientation. Since this state is so easily detectable that the quality level of display is lowered.

JP-A-2 308 223 discloses a liquid crystal display device including a transparent substrate, on which color filters, a protective layer for the filters and transparent electrodes are formed. On this substrate, a photosensitive resin layer where resin balls are dispersed is formed by a coating method. Then the resin layer with the balls is patterned after temporary baking and formed only on black marks between the filters.

### SUMMARY OF THE INVENTION

Therefore, in view of the problems pertaining to the prior art, the present invention has been made and the object of the present invention is to provide a gap controlling method that prevents the decrease of contrast due to a spacer material for a liquid crystal cell.

### BRIEF DESCRIPTION OF THE DRAWINGS

The invention may best be understood by reference to the following description taken in connection with the accompanying drawings in which:
Fig. 1 is an illustration of coating process,
Fig. 2 is an illustration of UV irradiation process,
Fig. 3 is a cross section of pattern space area after development, and
Fig. 4 is a conventional gap controlling method.

And, the numerals define the following:
1. glass substrate;
2. color filter;
3. ITO layer;
4. protective layer;
5. spacer material;
6. photosensitive resinous material;
7. UV radiation;
D. pattern space area

### DETAILED DESCRIPTION OF THE PREFERRED EMBODIMENTS

For the attainment of the above-mentioned object, according to the method of the present invention for controlling the gap of a liquid crystal cell, exclusively in the pattern space area outside the effective display area there is provided a gap controlling area by a sequence of steps comprising forming color filter and ITO layer on a glass substrate, forming a protective layer of SiO₂ on the color filter, ITO layer and said pattern space area, coating the protective layer with a spacer-material-containing black mask material by a predetermined printing means, pre-baking the coated glass substrate, irradiating the glass substrate with UV light from the back side of the substrate such that the area outside the color filter is exposed to the UV radiation and removing by way of development the black mask material not exposed to UV radiation thereby producing black mask and spacer material fixed to the black mask exclusively in the pattern space area.

The following are the rough example steps according to the present invention. (a) Glass substrate having on the surface thereof SiO₂ layer formed is prepared. The glass substrate is then coated by means of screen printing with a UV-curable black mask material containing 0.75% of a spacer material that is of a type having a resin coating on the surface thereof. (b) The coated glass substrate is subjected to pre-bake of 20 minutes at 90°C, which is irradiated the with UV light composed primarily of 360nm from the back side of the substrate to be followed by development with a cellosolve-based solvent. (c) The black mask material is fully cured by hard-bake of 2 hours at 230°C.

According to the above-mentioned steps, gap controlling area is formed exclusively in pattern space area outside the effective display area.

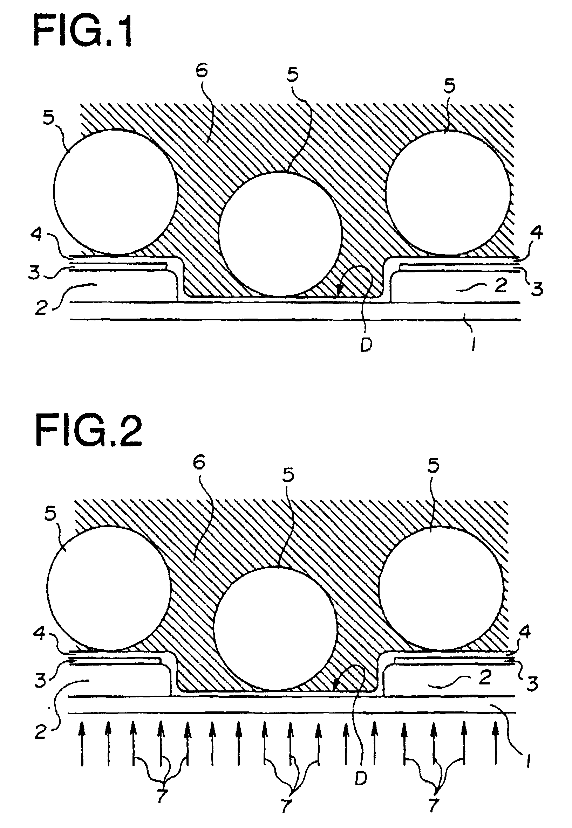

With reference to Figs. 1 through 3, the present invention is illustrated. When producing gap controlling (hereinafter refers as "GC") area exclusively in pattern space area D outside the effective display area, use is made of a negative black mask material comprised of a photosensitive resinous material 6, which has light shielding property in the region of visible light and has spectral sensitivity mainly in UV region and which is incorporated with a spacer material 5, and the black mask material is treated for the purpose of photolithography by self-alignment photolithographic process utilizing RGB color filter 2 as light shielding layer, with a characteristic result that the GC area is provided exclusively outside the effective display area.

As illustrated in Fig. 1, on glass substrate 1 there are disposed color filter 2 and ITO layer 3, and then a protective layer 4 of SiO₂, etc. is formed on the color filter 2, ITO layer 3 and pattern space area D. Then, the protective layer 4 is coated with a black mask material, which contains a spacer material 5, by a predetermined printing means including screen printing, roll coating, spin coating and offset process.

For GC area in pattern space area D, use is made of a black mask material which comprises a photosensitive resinous material 6 incorporated with a spacer material 5 composed of rigid particles such as glass fiber.

Utilized as the photosensitive resinous material 6 is a negative black mask material represented by a type which has light shielding effect in the region of visible light owing to black pigment or dye dispersed therein and which has a spectral sensitivity mainly in UV region.

The above-mentioned spacer material 5 is of a light transmissive type. Accordingly, when the back side of the glass substrate 1 is exposed to UV radiation 7, the UV light scatters inside the spacer material 5 and cures the black mask material that borders on the spacer material 5 such that the cured black mask material covers the spacer material 5 (see area A in Fig. 3). As a result, the spacer material 5 is held in a stable state.

Since the adhesion between the black mask, which is formed and surrounds the spacer material 5, and the spacer material 5 is weak, disbandment tends to occur. In order to increase the adhesion, utilized as a spacer material 5 is the one whose surface is coated with a resin such as an acrylic resin, thereby increasing the adhesion between the resin of the black mask and the resin on the surface of the spacer material 5.

A protective layer 4 (see area B in Fig. 3) of SiO₂, etc. is intended for the protection of ITO layer 3 on color filter 2. And, in case, GC area is formed exclusively in pattern space area D, when brush-cleaning, etc. are effected in the photolithography process, the spacer material 5 is released from the surface of glass substrate 1 and the released spacer material 5 damages ITO layer 3 of the effective display area and the color filter 2 to the extent that unlighting occurs due to disconnection. Therefore, for the prevention of such damage, the protective layer 4 of SiO₂, etc. is provided on the effective display area and pattern space area D.

For the stable gap control, the spacer material 5 in an amount not less than 0.5% by weight is incorporated in the black mask. This is because, where two of the glass substrates each containing a lesser amount (eg, not above 0.3% by weight) of the spacer material 5 are overlapped with each other, the force per spacer material 5 particle breaks the spacer material 5 and as a result a uniform GC precision becomes unobtainable.

Performance depending on the amounts of the incorporated spacer material:

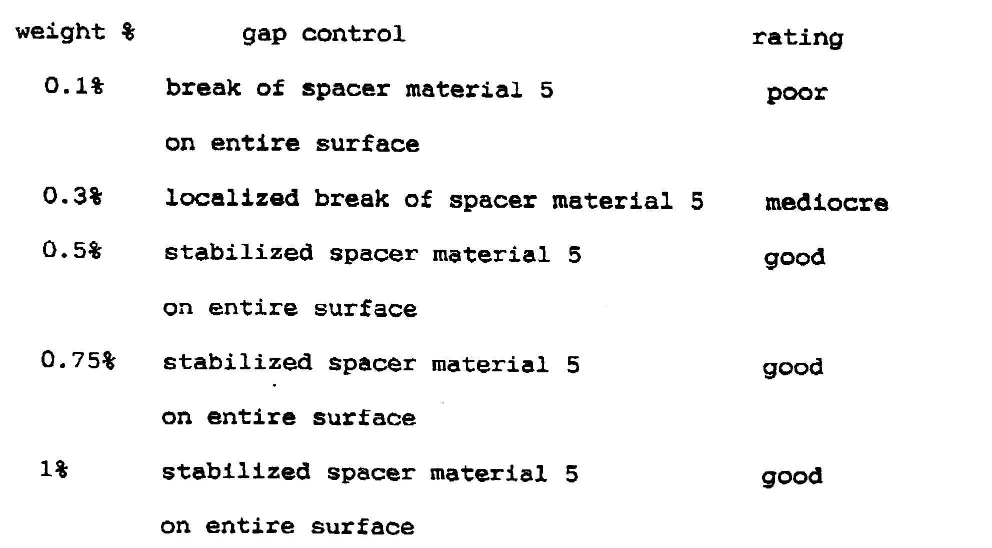

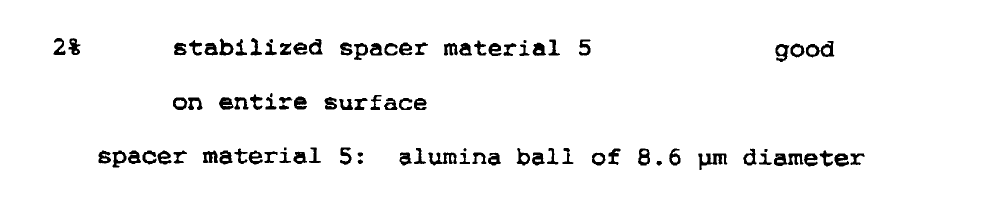

Next, the coating of black mask containing the spacer material 5 is pre-baked at 90°C for at least 10 minutes. If no pre-bake is effected or the period of time for the pre-bake is shorter, the pre-cure of the black mask applied is insufficient and therefore the holding of the spacer material 5 is instable with the result that the spacer material 5 is released thereby making it impossible to obtain a uniform GC precision.

After the coated glass substrate 1 is pre-baked, the back side of the glass substrate is irradiated with UV light 7 so that the area outside the color filter 2 is exposed to the UV radiation as illustrated in Fig. 2.

Further, as illustrated in Fig. 2, employing photolithography by alignment-type photolithographic process utilizing RGB color filter 2 as light shielding layer, GC area is provided exclusively outside the effective display area.

Lastly, when the black mask material except for that which has been exposed to the UV radiation is removed by means of development treatment, exclusively in pattern space area D there are produced black mask and spacer material 5 fixed to the black mask as illustrated in Fig. 3.

Based on the above-described constitution, the present invention has the effects as given below: (A) Because of the absence of spacer material on the effective display area, no abnormal orientation of liquid crystal molecules occurs on the display dots. Accordingly, the problem of spacer-material-induced reduction in contrast, which has been associated with the scattering process, can be solved. (B) Yield can be increased by lowering the level of rejection which has been caused by the dirts, brought in by wet-scattering method, inside the liquid crystal cell.

## Claims

1. A gap controlling method for liquid crystal cells by providing a gap controlling area exclusively in the pattern space area outside an effective display area, wherein there are produced black mask and spacer material fixed to the black mask exclusively in said pattern space area by a sequence of steps comprising:
forming color filter and ITO layer on a glass substrate;
forming a protective layer of SiO₂ on the color filter, ITO layer and said pattern space area;
coating the protective layer with a spacer-material-containing black mask material by a predetermined printing means;
pre-baking the coated glass substrate;
irradiating the glass substrate with UV light from the back side of the substrate such that the area outside the color filter is exposed to the UV radiation; and
removing by way of development the black mask material not exposed to UV radiation.

## Patentansprüche

1. Spaltsteuerungsverfahren für Flüssigkristallzellen durch Bereitstellen einer Spaltsteuerungsfläche ausschließlich in der Rasterleerfläche außerhalb einer wirksamen Anzeigefläche, bei welchem ausschließlich in der besagten Rasterleerfläche eine schwarze Abdeckung und an der schwarzen Abdeckung fixiertes Abstandshaltermaterial durch eine Folge von Schritten erzeugt werden, umfassend:
Ausbilden von Farbfilter und ITO-Schicht auf einem Glassubstrat;
Ausbilden einer Schutzschicht aus SiO₂ auf dem Farbfilter, der ITO-Schicht und der besagten Rasterleerfläche;
Überziehen der Schutzschicht mittels einer vorbestimmten Druckeinrichtung mit einem Abstandshaltermaterial enthaltenden schwarzen Abdeckmaterial;
Wärmevorbehandeln des beschichteten Glassubstrats;
Bestrahlen des Glassubstrats mit UV-Licht von der Rückseite des Substrats aus, so daß die Fläche außerhalb des Farbfilters der UV-Strahlunq ausgesetzt wird; und
Entfernen des nicht der UV-Strahlung ausgesetzten schwarzen Abdeckmaterials durch Entwicklung.

## Revendications

1. Procédé de réglage des espaces libres pour des cellules à cristaux liquides en procurant une zone de réglage des espaces libres exclusivement dans la zone réservée à l'image à l'extérieur d'une zone d'affichage effectif, dans lequel on procure un masque noir et une matière d'écartement fixée au masque noir exclusivement dans ladite zone réservée à l'image en passant par une succession d'étapes comprenant le fait de:
former un filtre coloré et une couche ITO sur un substrat en verre;
former une couche protectrice de SiO₂ sur le filtre coloré, la couche ITO et ladite zone réservée à l'image;
recouvrir la couche protectrice d'une matière de masque noir contenant une matière d'écartement, à l'aide d'un moyen d'impression prédéterminé;
soumettre le substrat en verre revêtu à une précuisson;
exposer le substrat en verre à un rayonnement UV depuis le côté dorsal du substrat de telle sorte que la zone à l'extérieur du filtre coloré est exposée au rayonnement UV; et
retirer par développement la matière de masque noir non exposée au rayonnement UV.
